# EUROPEAN PATENT APPLICATION

(11) **EP 4 429 054 A1**
(43) Date of publication of application: **11.09.2024**
(21) Application number: 24157213.0
(22) Date of filing: 12.02.2024
(51) Int. Cl.: H02H 7/12, H02H 7/08, H02M 1/32, H02P 27/06

(54) **A DRIVER FOR AN AC POWERED ELECTRIC MACHINE AND RELATED AC THREE-PHASE REFRIGERATING MACHINE**

(30) Priority: 14.02.2023 IT 202300002475
(71) Applicant: Carel Industries S.p.A., 35020 Brugine (PD) (IT)
(72) Inventor: MORANDIN, Mattia, 35020 Brugine (Padova) (IT); ZORDAN, Marco, 35020 Brugine (Padova) (IT)
(74) Representative: Barbaro, Gaetano

(57) **Abstract**

A switching driver of this disclosure can be configured to power at least one three-phase load, as well as two DC loads with two different DC voltages independent from each other. Thanks to it, it is possible to connect an electric machine with a switching driver to systems having only general protection with a type AC or type A differential switch because it intrinsically guarantees an intervention time to disconnect the electric machine, in case of the presence of a continuous type fault current, much less than approximately 5ms, which is the minimum time required by RCDs in the case of large amplitude fault currents. It has also been found that it is not essential to disconnect the electric machine by interrupting its operation even when a current dispersion of not excessive intensity is detected, but the electric machine can be driven according to an innovative driving method in order to reduce the electric power absorbed by it so that the current leakage is reduced correspondingly, becoming less than a minimum threshold.

Furthermore, a refrigeration machine equipped with such a switching driver is disclosed.

## Description

### TECHNICAL FIELD

The present disclosure relates to electrical control devices and more in particular to a driver suitable for an AC powered electric machine, as well as a related refrigerating machine and a method of driving an AC electric machine.

### BACKGROUND

Nowadays, in the field of refrigeration machines it is known to provide a control for the compressor which has the function of regulating its working speed according to the required cooling power.

Generally, variable speed electronic fans are also provided to create a heat exchange by forced convection to the evaporator and/or condenser part of the refrigeration machine.

Particularly when the refrigeration machine is connected to a three-phase power supply, these variable speed electronic fans are equipped with appropriate power supplies equipped with appropriate filters to avoid propagation of disturbances in the power supply network.

It is possible to power the same single-phase electronic fans at variable speed, without requiring DC/DC converters for their power supply, using the same compressor controller by connecting them to the DC bus upstream of the DC/AC inverter stage driving the compressor. An example of such a driver is illustrated in figure 1 and described in the patent publication EP3672055 in the name of the same Applicant. Thanks to the driver 10 shown, it is possible to create a refrigeration machine with a three-phase power supply independent of the available mains voltage, which will therefore be usable in any country regardless of the characteristics of the available mains voltage, for example three-phase.

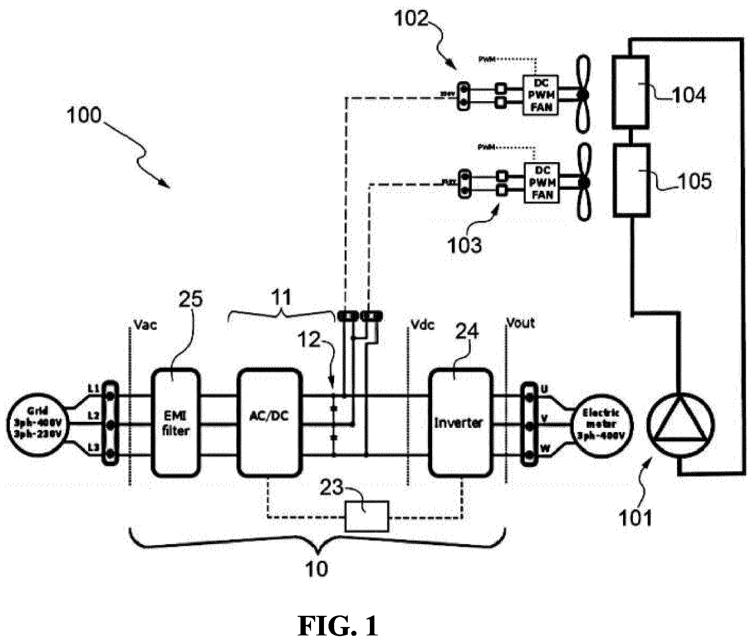

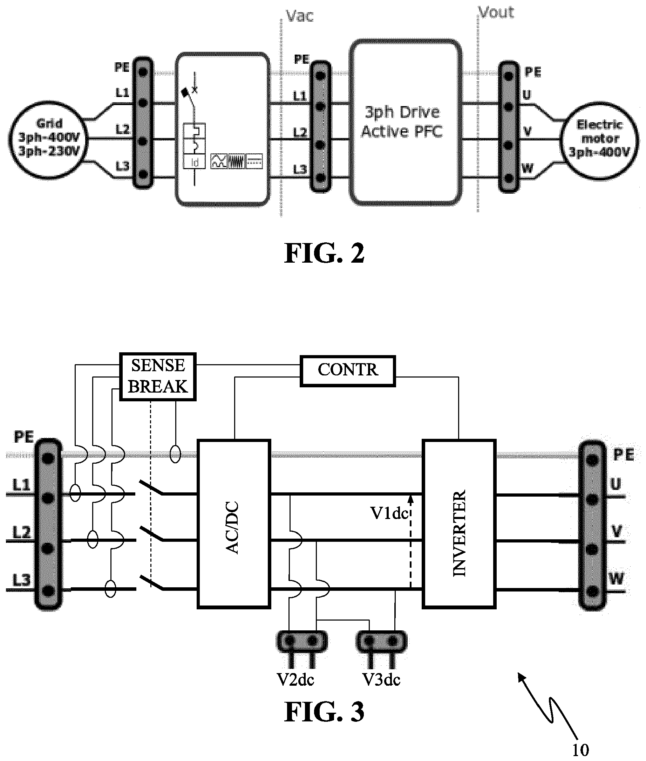

A limitation of the known machine shown in figure 1 consists in the fact that it can only be connected to systems equipped with adequate protection against direct contact with parts of the machine or system that are normally live, or against indirect contact with parts of the machine that are normally not live but which become so following a fault. A typical principle diagram of such a system is illustrated in figure 2, which shows a switch installed in the system upstream of any other electrical equipment connected to it.

According to current standards, upstream of any electric machine driven by a switching driver, a protection must be installed, typically a class B differential switch, suitable for detecting continuous fault currents. Unfortunately, in many systems only AC type residual current circuit breakers are installed, which can only identify pure sinusoidal earth fault currents because they are based on the properties of a magnetic toroidal element. In other systems with more advanced RCDs, type A RCDs are installed, but it is relatively rare to find systems in which type B RCDs are installed due to their relatively high cost.

As is well known in the art, in the case of continuous fault currents, type AC and type A residual current circuit breakers are "neutralized" and are no longer able to detect even sinusoidal fault currents that may arise in other points of the plant. According to current regulations, a machine like the one illustrated in figure 1 could not be connected to almost all current systems, which have class AC or class A residual current circuit breakers upstream, as in the event of continuous fault current there would be the risk of "neutralize" these residual current circuit breakers and therefore anyone who finds themself operating other electrical machines, connected to the same system and susceptible to breaking down, would be exposed to the risk of electrocution. Consequently, in addition to the cost of the machine in figure 1, the buyer would also have to bear the costs of adapting his electrical system.

It could be thought of resolving this drawback by equipping each electric machine such as that of figure 1, having a switching driver 10, with its respective type B differential switch, even if such differential switches are relatively expensive and therefore little in demand. However, such a solution would still be in contrast with the current regulations which prevent the connection of type B residual current circuit breakers electrically downstream of type AC or type A residual current circuit breakers, as the latter would still be "neutralised" in the event of a fault, leaving without protection the other electric machines connected to the same system.

### SUMMARY

Studies carried out by the Applicant have shown that it is possible to connect an electric machine with a switching driver to systems having only general protection with a type AC or type A differential switch, provided that the driver guarantees, in case of a continuous type fault current, an intervention time much shorter than 5ms to disconnect the electrical machine, which is the minimum time required by RCDs in the case of large amplitude fault currents. It has also been found that it is not essential to disconnect the electric machine by interrupting its operation even when a current dispersion of not excessive intensity is detected, but the electric machine can be driven according to an innovative driving method in order to reduce the electric power absorbed by it so that the current dispersion is reduced correspondingly, becoming less than a minimum threshold.

This result was obtained with a switching driver according to claim 1. According to one aspect, the switching driver of this disclosure can be configured so as to power both a three-phase load and a single-phase load, and optionally also two DC loads with two different DC voltages independent of each other.

Such a switching driver can be installed in a corresponding refrigeration machine.

Also disclosed is a driving method that can be implemented in a driver according to this disclosure to drive an AC electric machine ensuring disconnection of the electric machine in less than 5ms, in the event of relatively large current losses, and maintaining reduced power operation of the electric machine in case of current leakages exceeding a minimum value.

Preferred embodiments are defined in the attached claims.

### BRIEF DESCRIPTION OF THE DRAWINGS

Figure 1 illustrates a simplified diagram of a switching driver for a three-phase power refrigeration machine and of a related three-phase power refrigeration machine.
Figure 2 illustrates a schematic diagram of an electrical system with differential protection installed upstream of a switching driver of a three-phase electric motor.
Figure 3 illustrates a schematic of a driver device of this disclosure.
Figure 4 shows a refrigeration machine equipped with a driver of this disclosure.
Figure 5 is a flowchart illustrating operations to be implemented with the microprocessor control circuit of the device of Figure 3, according to a driving method of the present disclosure.

### DESCRIPTION OF ILLUSTRATIVE EMBODIMENTS

In this disclosure, for simplicity, the invention is illustrated by referring to the case of a refrigeration machine powered by a three-phase or even single-phase network and having two variable speed fans powered by respective direct voltages.

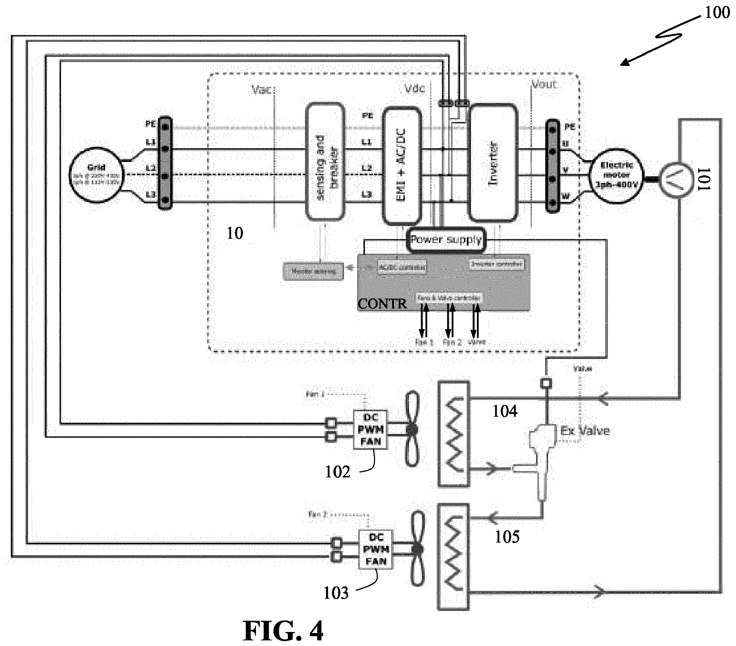

With particular reference to figures 3 and 4, they show, by way of example and without limitation, aspects of a driver 10 according to the present invention for an electric machine with alternating power supply, for example a refrigerating machine with three-phase power supply. However, it is understood that the illustrated driver 10 can be easily adapted to also operate with a single-phase power supply by eliminating, for example, line L2 from the diagram in figure 3 and replacing the third phase line L3 with the neutral N of the single-phase network.

In general, a driver 10 of this disclosure suitable for an AC powered electric machine will appear as a box equipped with AC input electrical connectors connectable to two AC electrical lines (line and neutral, in the case of single-phase power) , or to three electrical lines of a three-phase network L1, L2, L3 as shown in figure 3, and optionally also to a PE ground line, and is equipped with AC electrical output connectors configured to be connected to an electrical machine to be powered in alternating current, which can be a three-phase machine connected to the U, V, and W lines, and to the PE ground line, which is distributed through the driver A peculiarity of the device in figure 3 consists in the fact that it has an input circuit connected directly in cascade to the electrical input connectors, including controlled switches configured to establish electrical continuity with or disconnect from the electrical input connectors all the other functional blocks that are located downstream. Controlled switches may be switches of the type used to make switching conversion devices such as inverters. In general, controlled switches, preferably electronic switches, usable in a driver 10 of this disclosure can be semiconductor devices for example based on MOSFETs, or on SCRs, or IGBTs or even on transistor circuits, or a controlled contactor. These switches are characterized by opening/closing times of less than a millisecond, typically in the order of a microsecond, and thanks to their speed of response they allow to overcome at least in part the drawbacks implied by known drivers.

Like the known device of Figure 1, the driver 10 of this disclosure comprises:
a switching AC/DC converter connected to the electrical input connectors through the controlled switches so as to be powered exclusively through the controlled switches when they are closed and to be disconnected from the electrical input connectors and therefore not powered when the controlled switches are open, and provided with an output stage (not shown in the figures) configured to generate, on respective DC electrical lines, at least a first direct voltage V1dc (which represents in figure 3 the maximum DC voltage supplied to the inverter) generated by rectifying a respective voltage in alternating current taken from the AC input connectors,
an inverter connected to the DC power lines and which receives at least the first DC voltage V1dc, configured to generate at least one three-phase driving voltage for an electric machine on the AC output electrical connectors, a microprocessor control circuit CONTR powered by the AC/DC converter and connected to control the operation of the inverter, of the AC/DC converter and to selectively disable the inverter and/or the output stage (not shown) of the AC/DC converter.

The input switches are controlled by a detection and interruption device, including:
- current sensors, which for example can be Hall effect current sensors or of other types, preferably contactless Hall effect sensors, coupled in such a way as to detect the current passing through the input connectors, configured to detect respective currents circulating in the AC power lines, and optionally also in the ground line, generating respective current detection signals,
   - an interruption circuit SENSE BREAK distinct and separate from the microprocessor control circuit CONTR, connected to the control circuit CONTR and to the current sensors, configured to receive the current detection signals generated by the current sensors and to transmit to the control circuit CONTR respective digital signals representative of instantaneous values of detected current, wherein the interruption circuit SENSE BREAK is configured to open the input controlled switches to disconnect the AC/DC converter from the input terminals when it receives an emergency signal from the control circuit CONTR. Furthermore, the control circuit CONTR is configured to generate this emergency signal based on the instantaneous values of detected current circulating in the alternating power supply lines L1, L2, L3 and optionally also in the PE ground line.

Thanks to this configuration, the driver 10 detects the currents on all the incoming electrical lines and communicates the detected values to the control circuit CONTR which, when it detects an anomalous operating situation, can emit an emergency signal which opens the controlled input switches, or acts on the operation of the inverter or the output stage of the AC/DC converter to try to contain the current dispersion within acceptable limits.

The microprocessor control circuit CONTR will be able to read the detected current values with a period of much less than a millisecond, typically with a period of the order of a microsecond, so it can cause the opening of the controlled input switches in emergency situations when much less than a millisecond has passed since the failure occurred. With such intervention times, the driver 10 of the present disclosure prevents the circulation of relatively large continuous leakage currents and for times as to "neutralize" AC or type A residual current circuit breakers which may be electrically connected upstream in the system to which the driver 10 is connected. Consequently, any alternating current electrical machine driven by the driver 10 would be intrinsically safe and could be connected to any electrical system in full compliance with current regulations, regardless of the type of general differential switch that protects the electrical system. Furthermore, the microprocessor control circuit CONTR will be configured and/or programmed with software executed by the microprocessor to cyclically execute an algorithm, which will be discussed more fully hereinafter, in order to drive the electric machine to reduce not relatively large leakage currents without opening the controlled switches. This will be particularly convenient for driving, for example, a refrigeration machine to reduce leakage currents and to ensure that the refrigeration machine can continue to function.

To further guarantee the impossibility of having continuous leakage currents, according to one aspect of this disclosure the detection and interruption device is enclosed in a container suitable for keeping it electrically isolated from the surrounding environment, such as for example a plastic container.

According to one aspect, shown in figures 3 and 4, the AC/DC converter is a three-phase switching converter and the electrical input connectors are configured to be connected to three alternating electrical power lines L1, L2, L3 of a three-phase electrical network (or single phase). The three-phase switching AC/DC converter is configured to receive the three AC voltages (in the case of a single-phase AC/DC converter, it will receive as input two voltages of the two AC lines to which it will be connected), and the output stage (not shown) of the AC/DC switching converter is configured to generate, on three DC power lines, three DC voltages V1dc, V2dc and V3dc, where V1dc is the sum of the voltages V2dc and V3dc. The three direct voltages Vide, V2dc and V3dc can for example be obtained with an AC/DC converter with an output stage having a three-level topology, as described in the aforementioned patent publication EP3672055. In this way it will be possible to make a Vide voltage available on the DC power lines to power the inverter that drives an electric motor and to connect DC loads to be powered respectively at the V2dc and V3dc voltages, made available externally via respective output DC electrical connectors of the driver 10.

With reference to figure 4 which shows a driver 10 connected to a compressor 101 and to the fans 102 and 103 which blow on a condenser 104 and on an evaporator 105 of a refrigerating machine, with the driver 10 according to the present disclosure it is possible to connect variable speed DC fans 102 and 103 in order to power them at V2dc and V3dc voltages, respectively. Thus, autonomous voltage converters will not be necessary to power the fans 102 and 103 since the DC voltages available at the output of the AC/DC converter will already be at the appropriate level, and furthermore a higher voltage will be available to power the compressor 101. According to one aspect, the AC/DC converter can be configured so that the operating voltages V2dc and V3dc are of the same value and preferably at a value equal to 150V or 400V. The direct voltage V1dc will preferably not exceed 800 V.

Optionally, the AC/DC converter 11 can be configured to carry out a correction of the power factor of the loads connected to it. The driver 10, and specifically the AC/DC converter, will therefore act as an integrated PFC both for the variable speed DC fans 102, 103 and for the compressor, allowing the control structure to be greatly simplified compared to that of a traditional refrigeration machine.

According to one aspect, the microprocessor control circuit CONTR is configured to operate the inverter so as to regulate the operation of the electric machine powered by the driver 10. In the exemplified case of the refrigeration machine of figure 4, the inverter will be able to modulate the compressor speed according to the commands issued by the microprocessor control circuit CONTR.

According to one aspect, the AC/DC converter may also include, for example upstream of its output stage, an EMI filtering stage (figure 4) for electromagnetic interference, connected upstream of the AC/DC converter.

The present invention also relates to a refrigeration machine 100 comprising a compressor 101, a first variable speed DC fan 102, a second variable speed DC fan 103 and the driver 10.

The compressor 101 can be connected to the driver 10 also to be powered at variable speed.

The first fan 102 can be connected to the DC lines of the AC/DC converter to be powered by the DC voltage V2dc and the second fan 103 can be connected so as to be powered by the DC voltage V3dc.

The variable speed DC fans 102 and 103 will be associated with heat exchangers 104, 105 of the refrigeration machine 100, in a traditional manner and not illustrated and described in this document.

According to one aspect, the variable speed electronic fans 102 and 103 can be controlled in PWM DC mode via the microprocessor control circuit CONTR which, as shown in figure 4, can also control the valves of the heat exchangers 104 and 105 to further regulate the heat flow to be exchanged.

A driver for a refrigerating machine with three-phase power supply and a refrigerating machine with three-phase power supply which includes it, according to the present invention, also allow the refrigeration machine to be connected to any electrical system, regardless of the type of general differential switch of the system and the available mains voltage.

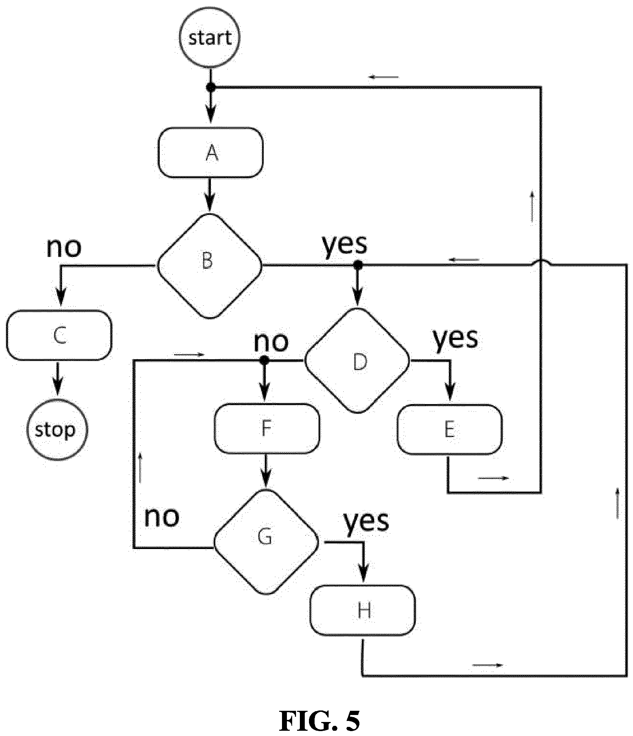

Figure 5 shows an example of a method, which can be implemented by the microprocessor control circuit CONTR of the driver 10 of this disclosure, thanks to its particular configuration, in order to guarantee that the AC electric machine, powered by it can continue to function even in the presence of leakage currents of a tolerable amount during normal operation. According to one aspect, the process includes the cyclic execution, by the microprocessor control circuit CONTR, of the following operations:
A) sensing instantaneous current values circulating in the AC power supply lines L1, L2, L3, and optionally also in the PE ground line, are detected and a DC and/or AC leakage current value towards ground is determined;
B) verifying whether the value of the leakage current toward ground is lower than a maximum threshold or not, and
C) if the verification at step B) is negative, then it means that a malfunction is in progress which requires emergency intervention, for which the controlled switches of the input circuit must be opened to definitively turn off both the driver 10 and the electric powered machine.

If, however, the verification in step B) is positive, then it means that the AC or DC leakage current towards ground, assuming it is present, is not of such an amount as to require the machine to be turned off. According to the schematic procedure:
D) verifying whether the value of the leakage current toward ground is lower than a minimum threshold, and
E) if the verification in step D) is positive, then it means that the AC electric machine is functioning correctly and there are no leakage currents worthy of note, so we return to step A).

Otherwise, if the verification in step D) is negative, then it means that there is a leakage current, but that it is of a modest amount so we can try to contain it. According to the procedure:
F) the inverter of the driver 10 is controlled to reduce the electrical power absorbed by the AC powered electric machine by acting on one of its control parameters, for example by reducing the speed of an electric motor or of a compressor powered by the driver 10 (thus also by external loads, for example fans and compressor), and
G) verifying whether this control parameter, which contributes to determining the electrical power absorbed by the AC powered electric machine, is at a minimum operating value and, if not, returns to step D) to check whether the problem has been solved by reducing the electrical power absorbed by the machine powered by the driver 10 (thus also by external loads, for example the fans and compressor).

If, however, the electrical power absorbed by the AC powered electric machine is at the minimum value, then
H) generating a warning signal so that users know that a slight current leakage is underway and that it cannot be resolved by reducing the power absorbed by the powered electric machine, then we return to step B).

According to one aspect, the maximum threshold and the minimum threshold can be individually modified by the user and stored in a safe and stable way over time.

The exemplified cycle can be repeated thousands of times per second by the driver 10, so the driving method of this disclosure allows detecting not only DC leakage currents, but also AC leakage currents. In fact, at mains frequencies of 50Hz or 60Hz, these AC leakage currents will certainly have periods greater than one millisecond, so the microprocessor control circuit CONTR can intervene practically as soon as a fault or a relatively large current leakage occurs. An advantage of this driving method consists in the fact that the operation of the machine is not interrupted by opening the controlled input switches as soon as a current leak is detected: disconnecting an electric machine from the electrical network, for example a refrigerating machine which by its nature may be subject to transient current leakages, could cause significant economic losses. With the driving method of this disclosure, an attempt is made to contain the dispersion of current by reducing the electrical power absorbed by the machine without stopping it and by signaling to the user the fact that a slight intensity current leakage is taking place.

## Claims

1. A driver suitable for an AC powered electric machine, comprising:
electrical input connectors configured to be connected to AC power supply lines of an electrical network, and optionally also to an ground line;
AC electrical output connectors configured to be connected to said AC powered electric machine, and optionally also to said ground line;
an input circuit connected directly in cascade to said electrical input connectors, including controlled switches configured to establish electrical continuity with or disconnect from said electrical input connectors;
an AC/DC switching converter connected in cascade to the electrical input connectors and to said controlled switches of the input circuit so as to be powered exclusively throughout said controlled switches of the input circuit, said AC/DC switching converter being configured to receive at least a first AC voltage of the AC power supply lines, further comprising an output stage configured to generate, on respective DC electric lines of the driver, at least one first DC voltage Vide as a rectified replica of said first AC voltage;
an inverter connected to said DC electric lines and connected in cascade to said AC/DC converter, configured to generate at least one three-phase driving voltage for said electric machine on said AC electric output connectors;
a microprocessor control circuit (CONTR) powered by said AC/DC converter, connected to control the operation of said inverter and of said AC/DC converter and to selectively disable said inverter and said AC/DC converter output stage;
a detection and interruption device, comprising:
- current sensors coupled to said input connectors, configured to detect respective currents circulating in said AC power supply lines, and optionally also in said ground line, generating respective current detection signals,
- an interruption circuit (SENSE BREAK) distinct and separated from the microprocessor control circuit (CONTR) connected to said microprocessor control circuit (CONTR) and to said current sensors, configured to receive the current detection signals and to transmit to said control circuit respective digital signals representative of instantaneous values of detected current, and configured to open said input controlled switches for disconnecting the AC/DC converter from the input connectors when it receives an emergency signal from said control circuit;
said control circuit being further configured to generate said emergency signal as a function of the instantaneous current values sensed in said AC power supply lines, and optionally also in said ground line;
wherein said control circuit being configured to cyclically performing the following operations:
A) detecting instantaneous current values circulating in said AC power lines, and optionally also in said ground line, and determining a value of leakage current to ground,
B) verifying whether said value of leakage current to ground is smaller than a maximum threshold,
C) if the verification at step B) is negative, opening the controlled switches of the input circuit to definitively switch off both the driver and said electric machine,
D) if the verification at step B) is affirmative, verifying whether said value of leakage current to ground is smaller than a minimum threshold,
E) if the verification at step D) is affirmative, returning to step A),
F) if the verification at step D) is negative, checking the inverter of the driver to act on a control parameter of the electric machine in order to reduce an electric power absorbed by said AC powered electric machine, such as for example fans and/or compressor,
G) verifying whether said control parameter, which determines the electric power absorbed by the AC powered electric machine, is at a minimum value and, if not, returning to step D),
H) if the verification at step G) is affirmative, generating a warning signal and returning to step B).

2. The driver according to claim 1, wherein said detection and interruption device is enclosed in a container suitable for keeping it electrically isolated from the surrounding environment.

3. The driver according to one of the preceding claims, wherein said AC/DC converter is configured to carry out a correction of the power factor PFC on said DC electric lines.

4. The driver according to one of the preceding claims, comprising a filtering stage, for filtering out electromagnetic interference, installed upstream of said AC/DC converter.

5. The driver according to one of the preceding claims, wherein each switch of said controlled switches of the input circuit is a crowbar circuit comprising a respective line fuse.

6. The driver according to one of the preceding claims, wherein:
the electrical input connectors are configured to be connected to three AC power supply lines of a three-phase electrical network;
the AC/DC switching converter is a three-phase converter and is configured to receive also a second AC voltage and a third AC voltage from the AC electric power lines through said controlled switches of the input circuit;
the output stage of the AC/DC switching converter is configured to generate, on three DC lines of the driver device, said first DC voltage Vide as a rectified replica of said first AC voltage, a second DC voltage V2dc as a rectified replica of said second AC voltage, and a third direct voltage V3dc as the sum of said first DC voltage Vide and said second DC voltage V2dc.

7. The driver according to claim 6, comprising DC electrical output connectors connected to said DC electric lines to make available outside the driver said second DC voltage V2dc and said third DC voltage V3dc.

8. The driver according to one of claims 6 or 7, wherein said AC/DC converter is configured such that said second DC voltage V2dc and said third DC voltage V3dc are equal.

9. A refrigerating machine comprising a compressor, a first variable speed electronic fan, a second variable speed electronic fan and a driver according to claim 7 connectable to three AC electric power lines of a three-phase electric network, wherein:
said compressor is connected so as to be driven by said inverter,
said first fan is connected to said DC electrical output connectors to be supplied with said second DC voltage V2dc,
said second fan is connected to said DC electrical output connectors to be supplied with said third DC voltage V3dc.

10. The refrigerating machine according to claim 9, wherein said first and second variable speed electronic fans each have a respective PWM DC control connected to the DC lines of the driver to operate said variable speed electronic fans (102, 103) with a respective adjustable speed.

11. A method of driving an AC powered electric machine, said method comprising the following operations:
providing and installing a driver according to one of claims 1 to 8;
connecting the AC electric output connectors of the driver to said AC powered electric machine, and connecting the electric input connectors of the driver to AC electric power lines of an electric network, and optionally also to a ground line;
cyclically performing the following operations:
A) detecting instantaneous current values circulating in said AC power lines, and optionally also in said ground line, and determining a value of leakage current to ground,
B) verifying whether said value of leakage current to ground is smaller than a maximum threshold,
C) if the verification at step B) is negative, opening the controlled switches of the input circuit to definitively switch off both the driver and said electric machine,
D) if the verification at step B) is affirmative, verifying whether said value of leakage current to ground is smaller than a minimum threshold,
E) if the verification at step D) is affirmative, returning to step A),
F) if the verification at step D) is negative, checking the inverter of the driver to act on a control parameter of the electric machine in order to reduce an electric power absorbed by said AC powered electric machine, such as for example fans and/or compressor,
G) verifying whether said control parameter, which determines the electric power absorbed by the AC powered electric machine, is at a minimum value and, if not, returning to step D),
H) if the verification at step G) is affirmative, generating a warning signal and returning to step B).

12. The method of driving according to claim 11 wherein the maximum threshold and the minimum threshold can be individually modified by a user and memorized in a safe and stable way over time.
